(19)

Europäisches
Patentamt
European
Patent Office
Office européen
des brevets

(11) **EP 1 741 890 A2**

(12) **EUROPEAN PATENT APPLICATION**

(43) Date of publication:
**10.01.2007 Bulletin 2007/02**

(51) Int Cl.:
*F01N 3/20* (2006.01)     *F01N 11/00* (2006.01)

(21) Application number: **06115731.9**

(22) Date of filing: **20.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **06.07.2005 JP 2005197585**

(71) Applicant: **KABUSHIKI KAISHA TOYOTA
JIDOSHOKKI
Kariya-shi,
Aichi-ken (JP)**

(72) Inventor: **MIZUGUCHI, Keiichi
Kariya-shi, Aichi-ken
Aichi 448-8671 (JP)**

(74) Representative: **TBK-Patent
Bavariaring 4-6
80336 München (DE)**

(54) **EXHAUST GAS PURIFYING DEVICE FOR AN INTERNAL COMBUSTION ENGINE**

(57)     An exhaust gas purifying device according to the present invention has an exhaust emission control catalyst provided in an exhaust passage of an internal combustion engine, a reducing agent adding unit provided in the exhaust passage at a position upstream of the exhaust emission control catalyst for adding a reducing agent, a control unit for controlling the reducing agent adding unit, and an air-fuel ratio estimating unit for estimating an air-fuel ratio prior to addition of the reducing agent. The control unit performs control such that addition of the reducing agent by the reducing agent adding unit is stopped when the air-fuel ratio estimated by the air-fuel ratio estimating unit reaches a stop reference value. When the air-fuel ratio is leaner than the stop reference value, the reduction efficiency of the exhaust emission control catalyst is low, so fuel serving as the reducing agent is wasted. However, since addition of the reducing agent is stopped when the estimated air-fuel ratio reaches the stop reference value, the reducing agent can be prevented from being added wastefully.

FIG. 1

**Description**

BACKGROUND OF THE INVENTION

1. Field of the Invention

The present invention relates to an exhaust gas purifying device for an internal combustion engine.

2. Description of the Related Art

In an internal combustion engine (in particular, a diesel engine, a lean-burn type gasoline engine, or the like) mounted in a vehicle or the like, nitrogen oxides (hereinafter referred to as "NOx") are contained in exhaust gas, so the amount of NOx needs to be reduced. NOx can be purified by being reduced by a reducing agent (e.g., a part of the fuel). Therefore, there have been disclosed various techniques for adding reducing agents to the exhaust gas. According to an example of such a technique, the amount of the reducing agent added is controlled through feedback using an air-fuel ratio sensor such that the air-fuel ratio of the exhaust gas flowing into a NOx catalyst (hereinafter referred to as "exhaust gas air-fuel ratio") becomes equal to a predetermined air-fuel ratio, and the addition of the reducing agent is prohibited when a target correction amount of the reducing agent according to a feedback control means exceeds a preset threshold (e.g., see JP 2002-161733 A). According to another technique, the pressure for adding a reducing agent is corrected according to the driving conditions of a vehicle, and the reducing agent is added to the exhaust gas at the corrected addition pressure (e.g., see JP 2002-038941 A).

The amount of the reducing agent added needs to be reduced when actual intake air amount is smaller than target intake air amount due to environmental changes or the like (e. g. , low atmospheric pressure in highlands). However, when the difference between the actual intake air amount and the target intake air amount is large to some degree, the reducing agent is added wastefully, so hydrocarbons (HC) and white smoke may be generated.

Conversely, the amount of the reducing agent added needs to be increased when the actual intake air amount is larger than the target intake air amount due to the performance such as when controlling to reduce the amount of EGR. However, when the difference between the actual intake air amount and the target intake air amount is somewhat large , NOx may not be reduced effectively despite the addition of the reducing agent. Consequently, addition of the reducing agent may be wasteful.

On the other hand, the air-fuel ratio sensor employed in the art disclosed in JP 2002-161733 A responds slowly. Therefore, it is difficult to accurately detect the air-fuel ratio from moment to moment by means of the air-fuel ratio sensor when a rich spike is realized by adding the reducing agent to exhaust gas in a short period of time, namely, when the air-fuel ratio in exhaust gas is temporarily made rich by adding fuel to the exhaust passage as the reducing agent.

Further, no countermeasure against the above-mentioned problem is disclosed in JP 2002-038941 A.

SUMMARY OF THE INVENTION

The present invention has been made in view of the foregoing circumstances, and it is therefore an object of the invention to provide an exhaust gas purifying device for an internal combustion engine, which can prevent the wasteful addition of a reducing agent.

An exhaust gas purifying device for an internal combustion engine according to the present invention includes: an exhaust emission control catalyst provided in an exhaust passage of the internal combustion engine; reducing agent adding means provided in the exhaust passage at a position upstream of the exhaust emission control catalyst, for adding a reducing agent; control means for controlling the reducing agent adding means; and air-fuel ratio estimating means for estimating an air-fuel ratio prior to addition of the reducing agent, in which the control means performs control so that addition of the reducing agent by the reducing agent adding means is stopped when the air-fuel ratio estimated by the air-fuel ratio estimating means reaches a stop reference value.

Further, estimating "the air-fuel ratio", of course includes the value of the air-fuel ratio itself being estimated as well as a value having substantially the same meaning as the air-fuel ratio being estimated (e. g. , estimating a value obtained by dividing the air-fuel ratio by 2).

The air-fuel ratio estimating means includes target intake air amount calculating means for calculating a target intake air amount sucked into the internal combustion engine in accordance with the driving condition of a vehicle, and intake air amount detecting means for detecting an actually measured intake air amount, and the air-fuel ratio estimating means may estimate the air-fuel ratio prior to addition of the reducing agent based on a ratio between the target intake air amount calculated by the target intake air amount calculating means and the actually measured intake air amount detected by the intake air amount detecting means.

Further, "the air-fuel ratio is estimated based on a ratio between the target intake air amount and the actually measured intake air amount", means that the air-fuel ratio is estimated by at least using the ratio. In other words, the air-fuel ratio may be estimated in consideration of other additional factors. For instance, the air-fuel ratio may be estimated based on factors such as engine rpm and a supercharging pressure as well as "the ratio between the target intake air amount and the actually measured intake air amount".

The air-fuel ratio estimating means also includes target fuel injection amount calculating means for calculating a target amount of fuel to be injected into the internal combustion engine in accordance with the driving condition of a vehicle, and intake air amount detecting means for detecting an actually measured intake air amount, and the air-fuel ratio estimating means estimates the air-fuel ratio prior to addition of the reducing agent based on a ratio between the target fuel injection amount calculated by the target fuel injection amount calculating means and the actually measured intake air amount detected by the intake air amount detecting means.

BRIEF DESCRIPTION OF THE DRAWINGS

In the accompanying drawings:

FIG. 1 is an explanatory diagram representing an example of an engine system employing an exhaust gas purifying device for an internal combustion engine according to the present invention; and
FIG. 2 is a flowchart representing an example of a procedure for NOx reduction control processing.

DETAILED DESCRIPTION OF THE PREFERRED EMBODIMENTS

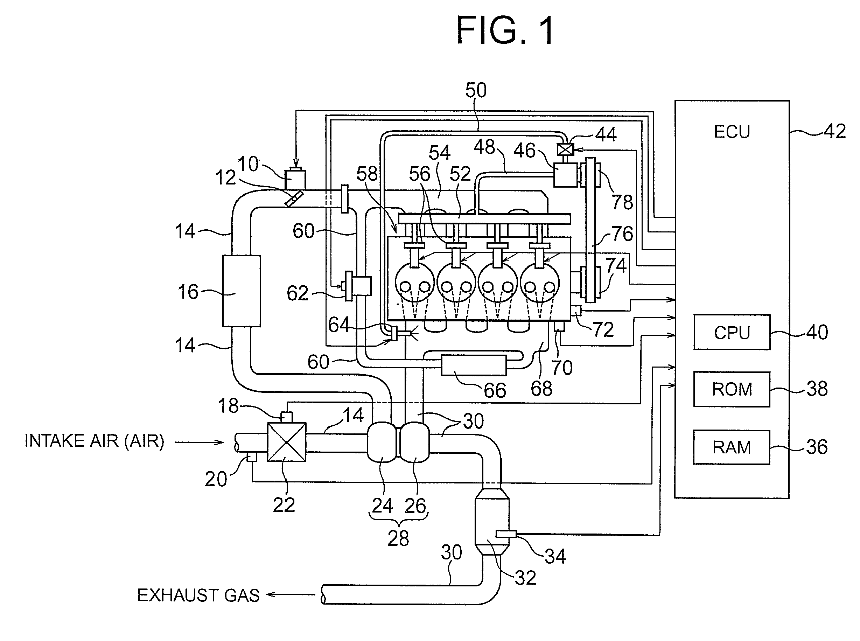

The best mode for carrying out the present invention will be described with reference to the drawings.
An explanatory diagram representing an example of an engine system constructed to realize the present invention is illustrated in FIG. 1. This engine system is equipped with a diesel engine 58, an ECU (electronic control unit) 42 for electronically controlling the diesel engine 58, and the like.
In this example, the diesel engine 58, which corresponds to an internal combustion engine, is composed of four inline cylinders. An intake manifold 54 for sending air that has been taken in (hereinafter referred to simply as "intake air") to the respective cylinders, and an exhaust manifold 68 for collecting exhaust gas discharged from the respective cylinders and sending the exhaust gas out to an exhaust pipe 30 are connected to the diesel engine 58. Disposed in each of the cylinders is a fuel injection nozzle (injector) 56 for injecting fuel into a combustion chamber. The diesel engine 58 is also equipped with a coolant temperature sensor 72 for outputting to the ECU 42 a signal corresponding to a temperature of coolant circulating inside the diesel engine 58, an RPM sensor 70 (e.g., a resolver or the like) for outputting to the ECU 42 a signal corresponding to an engine RPM , and the like.
Fuel that has been supplied from a fuel tank through a fuel pump 46 is sent from a fuel pipe 48 to the fuel injection nozzle 56 via a common rail 52. Apart from this, fuel is also sent from the fuel pump 46 to a reducing agent injection nozzle 64 via an open/close valve 44 and a reducing agent supply pipe 50. The fuel pump 46 operates using a power (i.e., a rotational torque) output from an output shaft (crankshaft) of the diesel engine 58 as a drive source. To be more specific, a pump pulley 78 provided on the fuel pump 46 and a crank pulley 74 provided on the output shaft of the diesel engine 58 are coupled to each other by a belt 76. Part of the power of the diesel engine 58 is transmitted to the fuel pump 46 through the belt 76. The amount of fuel injected from the fuel injection nozzle 56 (hereinafter referred to also as "fuel injection amount") is so controlled as to become equal to a target fuel injection amount, which is determined from a later-described map showing a relationship between a target intake air amount and a fuel injection amount. The fuel injection amount is so controlled as to increase with increases in target intake air amount and to decrease with decrease in target intake air amount. The timings for opening/closing respective fuel injection nozzles 56 and the openings thereof are controlled by signals that are output from the ECU 42 in accordance with an operational state of the diesel engine 58. The reducing agent supply pipe 50 extends across the open/close valve 44. The reducing agent injection nozzle 64, the open/close valve 44, and the like will be described later.
Next, an intake system of the diesel engine 58 will be described. The intake manifold 54 is connected to intake ports, which are provided for the cylinders separately. Referring to FIG. 1, however, the intake ports are not illustrated for the sake of visual simplicity. An intake pipe 14 and an EGR passage 60 are connected to the intake manifold 54.
Along the intake pipe 14 are provided an air cleaner 22, a compressor 24, an intercooler 16, a throttle valve 12, and the like. Intake air is introduced from the intake pipe 14 into combustion chambers (i.e., into the respective cylinders) of the diesel engine 58 via the intake manifold 54. The open/close control of the throttle valve 12 (or the opening control of the throttle valve 12) is performed by an actuator 10, which operates in accordance with a signal output from the ECU 42. Employed as the actuator 10 is, for example, a stepper motor, a solenoid, or the like.
The air cleaner 22, which removes dust and the like contained in intake air, is equipped with an airflow meter 18 for outputting to the ECU 42 a signal corresponding to a flow rate (i.e., intake air amount) of intake air flowing through the intake pipe 14. The airflow meter 18 corresponds to the intake air amount detecting means. The compressor 24 and a later-described turbine 26 constitute a turbocharger 28. The compressor 24 compresses intake air introduced through the air cleaner 22. The intercooler 16 cools intake air that has been compressed by the compressor 24 and reaches high temperatures. An inlet portion of the intake pipe 14 is equipped with an atmospheric pressure sensor 20 for outputting to the ECU 42 a signal corresponding to atmospheric pressure.

Furthermore, an exhaust system of the diesel engine 58 will be described. The exhaust manifold 68 is connected to exhaust ports, which are provided for the cylinders, respectively. The exhaust manifold 68 is equipped with the reducing agent injection nozzle 64, and is connected to the exhaust pipe 30 and the EGR passage 60.

The reducing agent injection nozzle 64 corresponds to the reducing agent adding means of the present invention. An injection port of the reducing agent injection nozzle 64 faces the interior of the exhaust manifold 68 so that fuel (which is used as a reducing agent) is injected into the exhaust manifold 68. The injection of the fuel is controlled in accordance with a signal from the ECU 42. The fuel thus injected is supplied from the fuel pump 46 via the reducing agent supply pipe 50. The injection amount and the like of the fuel are controlled by the open/close valve 44, which operates in accordance with a signal from the ECU 42.

Along the exhaust pipe 30 the turbine 26, NOx catalyst 32, and the like are provided. The turbine 26 and the aforementioned compressor 24 constitute the turbocharger 28. The turbine 26 is caused to rotate by exhaust gas flowing through the exhaust pipe 30, thereby serving as a power source for operating the compressor 24. That is, the rotational speed of the turbine 26 increases or decreases in accordance with a flow rate of exhaust gas flowing through the exhaust pipe 30 (hereinafter referred to as "exhaust gas flow rate"), and the compressor 24 coupled to the turbine 26 operates to compress intake air. The NOx catalyst 32, which is a storage-reduction type, corresponds to the exhaust emission control catalyst and performs the function of absorbing NOx. The NOx catalyst 32 is equipped with a temperature sensor 34 for outputting to the ECU 42 a signal corresponding to the temperature of the NOx catalyst 32.

The EGR passage 60, which connects the exhaust manifold 68 to the intake manifold 54, has a function of recirculating part of exhaust gas as intake air. The EGR passage 60 extends across an EGR cooler 66, a flow rate adjusting valve 62, and the like. The EGR cooler 66 cools exhaust gas flowing through the EGR passage 60 (hereinafter referred to as "EGR gas"). The EGR cooler 66 is provided with a coolant passage (not shown) through which part of coolant for cooling the diesel engine 58 circulates. The flow rate adjusting valve 62, which is constructed of, for example, an electromagnetic valve or the like, adjusts the flow rate of EGR gas in accordance with the magnitude of an applied voltage.

Next, the configuration and functions of the ECU 42, which corresponds to the control means, the intake air amount detecting means, the target intake air amount calculating means, the target fuel injection amount detecting means, and the air-fuel ratio estimating means of the present invention, will be described briefly. The ECU 42 is mainly composed of a CPU 40 and has storage means such as a ROM 38 and a RAM 36, circuits for inputting/outputting signals, and the like. Programs and the like for realizing a later-described NOx reduction control processing and other control processings are stored in the ROM 38. The ECU 42 performs the processing after receiving signals output from the airflow meter 18, the atmospheric pressure sensor 20, the temperature sensor 34, the RPM sensor 70, the coolant temperature sensor 72, and the like, respectively.

The ECU 42 outputs signals to the fuel injection nozzles 56 so as to control the injection of fuel to be supplied to the combustion chambers, and outputs signals to the open/close valve 44 and the reducing agent injection nozzle 64 with a view to reducing the NOx in exhaust gas so as to perform the control of injecting fuel and the like. To be more specific, when the reducing agent injection nozzle 64 injects fuel as a reducing agent, the ECU 42 opens the open/close valve 44 so as to supply fuel to the reducing agent injection nozzle 64. On the other hand, when the reducing agent injection nozzle 64 does not inject fuel as a reducing agent, the ECU 42 closes the open/close valve 44 so as to stop fuel from being supplied to the reducing agent injection nozzle 64. The ECU 42 controls the timing for opening/closing the reducing agent injection nozzle 64, thereby controlling the amount of fuel injected from the reducing agent injection nozzle 64 and the timing for injecting fuel therefrom.

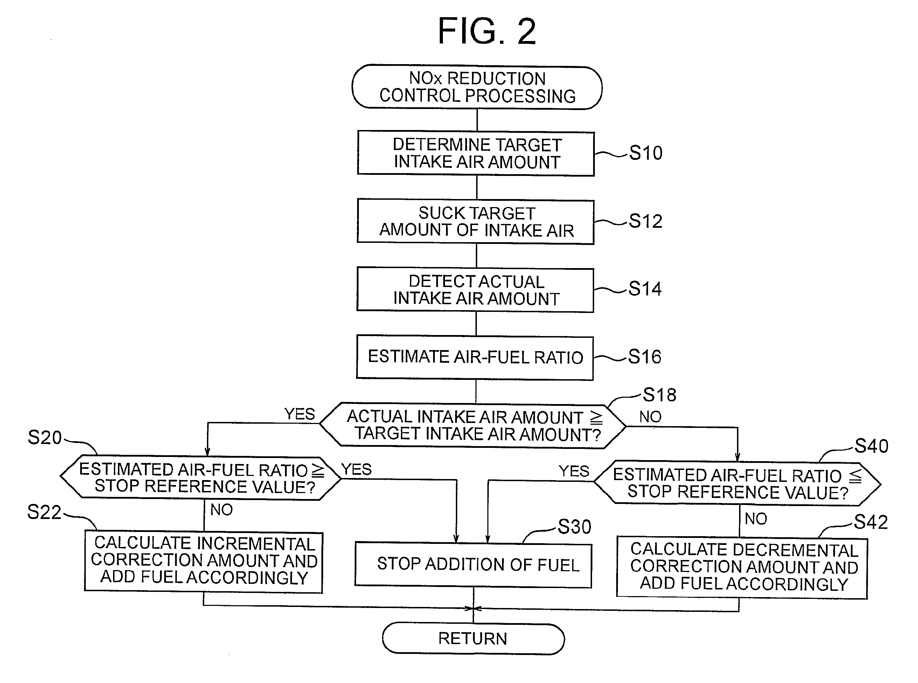

The content of processing performed by the ECU 42 in reducing the NOx contained in exhaust gas in the engine system configured as described above will be described with reference to FIG. 2. FIG. 2 illustrates the procedure of the NOx reduction control processing using a flowchart.

In the NOx reduction control processing illustrated in FIG. 2, a target intake air amount to be sucked into the diesel engine 58 (hereinafter referred to as "target intake air amount") is determined in accordance with the driving condition of a vehicle at that point in time (Step S10), and a signal is output to the actuator 10 to actuate the throttle valve 12 so that the determined intake air amount is obtained (Step S12). The aforementioned target intake air amount is obtained on the assumption that the vehicle is in a steady driving state at a normal temperature and a normal pressure, and is determined based on input conditions, for example, engine RPM detected by the RPM sensor 70, a temperature detected by the coolant temperature sensor 72, the opening of an accelerator, and the like. To be more specific, the target intake air amount is determined according to an intake air amount map prescribing a relationship between the input conditions and the intake air amount.

The actual intake air amount obtained through the control in Step S12 is detected by the airflow meter 18 (Step S14), and an air-fuel ratio prior to the addition of the reducing agent is estimated (Step S16). The air-fuel ratio is estimated according to, for example, the following methods. According to the first method, the air-fuel ratio is estimated from a ratio between the target intake air amount determined in Step S10 and the intake air amount actually measured in Step S14 (hereinafter referred to as "actually measured intake air amount"). According to the second method, a target amount of fuel injected from the fuel injection nozzles 56 (hereinafter referred to as "target fuel injection amount") is determined in accordance with a driving state of the vehicle at that point in time in the same manner as in Step S10, and the air-fuel ratio is estimated from a ratio between the determined target fuel injection amount and the actually measured intake air amount. According to one of the other methods, the air-fuel ratio is estimated in consideration of atmospheric pressure detected by the atmospheric pressure sensor 20 as well.

After the air-fuel ratio has been estimated, the NOx reduction control processing is divided (Steps S20, S40) according to a relationship between the actually measured intake air amount and the target intake air amount (Step S18) and a relationship between the air-fuel ratio estimated in Step S16 (hereinafter referred to as "the estimated air-fuel ratio") and stop reference values. The stop reference values have an upper limit and a lower limit, which are stored in advance in the storage means such as the ROM 38 and the RAM 36.

When the actually measured intake air amount has become equal to or larger than the target intake air amount (YES in Step S18) and the estimated air-fuel ratio is smaller than the stop reference value (the upper limit) (YES in Step S20) in the case where, for example, EGR amount reducing control or the like is performed, an incremental correction amount by which the amount of fuel to be added to reduce the NOx in exhaust gas is increased is calculated, and fuel is injected from the reducing agent injection nozzle 64 into the exhaust manifold 68 according to the incremental correction amount and then added (Step S22). As the actually measured intake air amount becomes larger than the target intake air amount and then increases with respect thereto, the amount of unreduced NOx increases. However, since the amount of added fuel is increased as described above, the NOx can be reduced reliably.

A correction amount (Q) calculated in Step S22 is calculated according to the following equation 1, which uses an actually measured intake air amount (A), a target intake air amount (B), and a base addition amount ($Q_0$). The base addition amount ($Q_0$) is determined from a base addition amount map obtained from tests or the like, according to the driving condition of the vehicle at that point in time.

$$Q = Q_0 \times (A/B) \quad \ldots \quad \text{(Equation 1)}$$

On the other hand, when the actually measured intake air amount is smaller than the target intake air amount (NO in Step S18) and the estimated air-fuel ratio is larger than the stop reference value (the lower limit) (NO in Step S40), a decremental correction amount by which the amount of fuel added to reduce the NOx in exhaust gas is reduced is calculated, and fuel is added by being injected from the reducing agent injection nozzle 64 into the exhaust manifold 68 according to the decremental correction amount (Step S42). The decremental correction amount is calculated in the same manner as in Step S22 according to the above-mentioned equation. If the amount of added fuel is not reduced when the actually measured intake air amount is smaller than the target intake air amount, the amount of discharged hydrocarbons (HC) as well as the amount of discharged NOx increases due to a surplus of fuel. However, since the amount of added fuel is reduced in Step S42, the hydrocarbons (HC) and the NOx can be prevented from being discharged.

Meanwhile, when the actually measured intake air amount has become equal to or larger than the target intake air amount (YES in Step S18) and the estimated air-fuel ratio is equal to or larger than the stop reference value (the upper limit) (YES in Step S20), the air-fuel ratio of exhaust gas is excessively lean, so the amount of air is excessively larger than the amount of fuel in the combustion chambers of the diesel engine 58 as well. Even when the amount of the added reducing agent is corrected to be increased in this case, the reduction efficiency of the NOx catalyst 32 is low, so the fuel serving as the reducing agent is wasted. The first reason for this phenomenon is that an enormous amount of fuel must be added until the air-fuel ratio is made equal to the stoichiometric air-fuel ratio, so the amount of reduced NOx measuring up to the amount of added fuel cannot be obtained. The second reason is that the temperature of exhaust gas almost always lowers when the air-fuel ratio is shifted toward the lean side, so it also becomes unlikely for the added fuel to vaporize due to a deterioration in the activity of the NOx catalyst 32. In such a state, the reducing agent may be wasted even if it is added to reduce NOx. Therefore, the addition of fuel from the reducing agent injection nozzle 64 into exhaust gas is suspended (Step S30).

When the actually measured intake air amount is smaller than the target intake air amount (NO in Step S18) and the estimated air-fuel ratio is equal to or smaller than the stop reference value (the lower limit) (YES in Step S40), the air-fuel ratio of exhaust gas is excessively rich, for example, richer than the stoichiometric air-fuel ratio. Since hydrocarbons (HC) and white smoke are generated in this case, the addition of fuel from the reducing agent injection nozzle 64 into exhaust gas is suspended (Step S30).

According to the foregoing embodiment, when the air-fuel ratio is leaner than the stop reference value, the reduction efficiency of the NOx catalyst 32 is low, and fuel serving as the reducing agent is wasted. In the foregoing embodiment, however, when the estimated air-fuel ratio reaches the stop reference value (YES in Steps S20 and S40 of FIG. 2), the addition of the reducing agent from the reducing agent injection nozzle 64 is suspended (Step S30 of FIG. 2), so the reducing agent can be prevented from being added wastefully. Accordingly, hydrocarbons (HC) and white smoke as well as NOx can be restrained from being discharged.

[Other Embodiments]

Although the best mode for carrying out the present invention has been described, the present invention should not be limited thereto at all. In other words, the present invention can be carried out in various modes as long as they do not depart from the gist of the present invention. For instance, the following respective embodiments of the present invention may be realized.

(1) In the foregoing embodiment, both the upper limit and the lower limit are provided as the stop reference values for the estimated air-fuel ratio (see Steps S20 and S40 of FIG. 2). Instead of this embodiment, it is also appropriate to provide only one of the upper limit and the lower limit.
(2) In the foregoing embodiment, the amount of intake air is controlled by controlling the opening of the throttle valve 12 (see Step S12 of FIG. 2). Instead of this embodiment, it is also appropriate to refrain from controlling the amount of intake air. For instance, the intake pipe 14 is structured to be fully open so that air can be sucked thereinto. Even if the intake pipe 14 is thus structured, the addition of the reducing agent is suspended when the estimated air-fuel ratio reaches the stop reference value. Therefore, the reducing agent can be prevented from being added wastefully.
(3) In the foregoing embodiment, the present invention is applied to the diesel engine 58 as an internal combustion engine (see FIG. 1). Instead of this embodiment, the present invention is also applicable in the same manner to a lean-burn gasoline engine of cylinder direct injection type. Even in the case of this lean-burn gasoline engine, the addition of fuel is suspended when the air-fuel ratio of exhaust gas reaches the stop reference value, so the occurrence of too high a rich spike is prevented. Accordingly, hydrocarbons (HC) and white smoke as well as NOx can be restrained from being discharged.

An exhaust gas purifying device according to the present invention has an exhaust emission control catalyst provided in an exhaust passage of an internal combustion engine, a reducing agent adding unit provided in the exhaust passage at a position upstream of the exhaust emission control catalyst for adding a reducing agent, a control unit for controlling the reducing agent adding unit, and an air-fuel ratio estimating unit for estimating an air-fuel ratio prior to addition of the reducing agent. The control unit performs control such that addition of the reducing agent by the reducing agent adding unit is stopped when the air-fuel ratio estimated by the air-fuel ratio estimating unit reaches a stop reference value. When the air-fuel ratio is leaner than the stop reference value, the reduction efficiency of the exhaust emission control catalyst is low, so fuel serving as the reducing agent is wasted. However, since addition of the reducing agent is stopped when the estimated air-fuel ratio reaches the stop reference value, the reducing agent can be prevented from being added wastefully.

**Claims**

1.   An exhaust gas purifying device for an internal combustion engine, comprising:

an exhaust emission control catalyst provided in an exhaust passage of the internal combustion engine;
reducing agent adding means provided in the exhaust passage at a position upstream of the exhaust emission control catalyst, for adding a reducing agent;
control means for controlling the reducing agent adding means; and
air-fuel ratio estimating means for estimating an air-fuel ratio prior to addition of the reducing agent,

wherein the control means performs control so that addition of the reducing agent by the reducing agent adding means is stopped when the air-fuel ratio estimated by the air-fuel ratio estimating means reaches a stop reference value.

2.   An exhaust gas purifying device for an internal combustion engine according to claim 1, **characterized in that**:

the air-fuel ratio estimating means comprises:

target intake air amount calculating means for calculating a target intake air amount sucked into the internal combustion engine in accordance with a driving condition of a vehicle; and
intake air amount detecting means for detecting an actually measured intake air amount,

wherein the air-fuel ratio estimating means estimates the air-fuel ratio prior to addition of the reducing agent based on a ratio between the target intake air amount calculated by the target intake air amount calculating means and the actually measured intake air amount detected by the intake air amount detecting means.

3. An exhaust gas purifying device for an internal combustion engine according to claim 1, **characterized in that**:

the air-fuel ratio estimating means comprises:

target fuel injection amount calculating means for calculating a target fuel injection amount injected into the internal combustion engine in accordance with a driving condition of a vehicle; and
intake air amount detecting means for detecting an actually measured intake air amount,

wherein the air-fuel ratio estimating means estimates the air-fuel ratio prior to addition of the reducing agent based on a ratio between the target fuel injection amount calculated by the target fuel injection amount calculating means and the actually measured intake air amount detected by the intake air amount detecting means.

FIG. 1

# FIG. 2

NOx REDUCTION
CONTROL PROCESSING

↓

DETERMINE TARGET
INTAKE AIR AMOUNT — S10

↓

SUCK TARGET
AMOUNT OF INTAKE AIR — S12

↓

DETECT ACTUAL
INTAKE AIR AMOUNT — S14

↓

ESTIMATE AIR-FUEL RATIO — S16

↓

S18 — ACTUAL INTAKE AIR AMOUNT ≧
TARGET INTAKE AIR AMOUNT?

YES → S20 ESTIMATED AIR-FUEL RATIO ≧
STOP REFERENCE VALUE?

NO → S40 ESTIMATED AIR-FUEL RATIO ≦
STOP REFERENCE VALUE?

YES → S30 STOP ADDITION OF FUEL

S20 YES → S22 NO CALCULATE INCREMENTAL
CORRECTION AMOUNT AND
ADD FUEL ACCORDINGLY

S40 YES → S42 NO CALCULATE DECREMENTAL
CORRECTION AMOUNT AND
ADD FUEL ACCORDINGLY

↓

RETURN

EP 1 741 890 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002161733 A
- JP 2002038941 A